# EUROPÄISCHE PATENTSCHRIFT

(11) **EP 2 900 949 B1**
(45) Veröffentlichungstag und Bekanntmachung des Hinweises auf die Patenterteilung: **19.07.2017**
(21) Anmeldenummer: 13744496.4
(22) Anmeldetag: 29.07.2013
(51) Int. Cl.: F01N 3/20, B23K 26/24

(54) **TEMPERATURROBUSTES DOSIERMODUL**
TEMPERATURE RESISTANT DOSING VALVE
SOUPAPE DE DOSAGE RÉSISTANT À LA TEMPÉRATURE

(30) Priorität: 28.09.2012 DE 102012217703
(43) Veröffentlichungstag der Anmeldung: 05.08.2015
(73) Patentinhaber: Robert Bosch GmbH, 70442 Stuttgart (DE)
(72) Erfinder: KIONTKE, Martin, 71254 Ditzingen (DE); POHL, Stephan, 71701 Schwieberdingen (DE); KNITTEL, Achim, 71254 Ditzingen (DE); WINKLER, Jochen, 73730 Esslingen (DE)
(86) Internationale Anmeldenummer: PCT/EP2013/065864
(87) Internationale Veröffentlichungsnummer: WO 2014/048611

(56) Entgegenhaltungen:
- EP-A1- 2 503 122
- WO-A1-2012/049175
- JP-A- H0 996 212

## Beschreibung

Die vorliegende Erfindung betrifft ein Dosiermodul nach dem Oberbegriff des Anspruchs 1.

### Stand der Technik

DE 44 36 397 B4 bezieht sich auf eine Einrichtung zum Nachbehandeln von Abgasen. Die Einrichtung umfasst ein Abgassammelsystem, in dem ein Reduktionskatalysator zur Reduktion von NOₓ-Bestandteilen des Abgases der Brennkraftmaschine angeordnet ist. Die Einrichtung umfasst ferner eine Dosiereinrichtung, umfassend ein elektrisch gesteuertes Dosierventil zum dosierten Einbringen eines Reduktionsmittels in den Strom des dem Katalysator zugeführten Abgases, abhängig von einem im Kennfeld gespeicherten Wert des Noₓ-Gehaltes im Abgas bei verschiedenen Betriebsparametern der Brennkraftmaschine sowie des Katalysators. Das Ventil zur Steuerung der Luftzufuhr ist ein elektrisch gesteuertes Steuerventil, das stromabwärts der Austrittsöffnung des Dosierventiles angeordnet ist und dessen Austrittsöffnung unmittelbar in den Abgasstrom der Brennkraftmaschine mündet. Das Steuerventil ist von einem Körper aufgenommen, der von einem Kühlmedium umströmbar ist, so dass das Steuerventil gekühlt ist.

US 2008/0236147 A1 offenbart ein Einspritzsystem, welches im Rahmen der selektiven katalytischen Reduktion an einem Kraftfahrzeug zur Reduktion von NOₓ-Anteilen im Abgas eingesetzt wird. Gemäß dieser Lösung umfasst das Einspritzsystem einen Injektor, der über einen elektrischen Anschluss mit Strom versorgt wird. Innerhalb des elektrischen Anschlusses befindet sich ein elektrischer Kontakt, der zur Aufnahme eines Steckers einer Anschlussleitung konfiguriert ist.

US 2010/0108020 A1 hat ein Anschlusssystem für elektrische Leitungen zum Gegenstand, die in gefährlichen Bereichen, so zum Beispiel in einem Bereich in dem Explosionsgefahr herrscht, wie zum Beispiel die Umgebung einer Verbrennungskraftmaschine, verlegt sind. Das offenbarte Anschlusssystem eignet sich zum elektrischen Anschluss von Leitungen verschiedener Sensoren und Komponenten. Das Anschlusssystem umfasst eine Gummitülle sowie eine Kappe, die mit einem Innengewinde versehen ist. Dabei dient die Gummitülle als elektrischer und thermischer Isolator und wird im montierten Zustand des Anschlusssystemes komprimiert.

DE 10 2009 060 065 A1 offenbart eine Fluidleitung für Harnstoff-Wasser-Lösungen in NOₓ-Reduktionseinrichtungen, die gemäß der selektiven katalytischen Reduktion (SCR) arbeiten. Die Fluidleitung ist aus einem thermischen Vulkanisat hergestellt. Das thermische Vulkanisat weist gummiartige Eigenschaften auf und ist auch unter der Bezeichnung Thermoplastik-Elastomer bekannt. Das thermische Vulkanisat zeichnet sich insbesondere durch eine hohe Beständigkeit gegenüber aggressiven Flüssigkeiten aus und weist eine sehr hohe Flexibilität sowie eine hervorragende Biegsamkeit auf. Eine aus thermischem Vulkanisat gefertigte Fluidleitung gemäß DE 10 2009 060 065 A1 wird zum Verbinden von Tanks, Pumpen, Einspritzdüsen oder zur Aufnahme von Kupplungen eingesetzt.

In Dosiermodulen, die im Rahmen von Abgasnachbehandlungssystemen eingesetzt werden, werden Einspritzventile eingesetzt, die der Harnstoffdosierung dienen. Um mit der Ventilspitze des Einspritzventiles so nah wie möglich an den Abgasstrom zu gelangen, wird in diesen Dosiermodulen die Ventilaufnahme aktiv gekühlt. Dies geschieht durch einen Anschluss des Kühlkörpers an den Kühlmittelkreislauf des Fahrzeugs. Dadurch ist sichergestellt, dass auch bei abgasnaher Positionierung des Ventiles die Ventilspitzentemperatur im Betrieb nicht über 120°C ansteigt. Wenn bei einem Dosiermodul ein Anschlussstück aus Kunststoff (PA66), über welches die Zuleitung für den Betriebs-/Hilfsstoff kontaktiert wird, außerhalb des Kühlkörpers verläuft, ist dieses der Umgebungstemperatur ausgesetzt und kann sich in kritischen Betriebszuständen, so zum Beispiel bei hohen Umgebungstemperaturen im Betrieb oder bei einem Heißabsteller, aufheizen.

Dabei kann ein hoher Wärmeeintrag über das Kunststoffanschlussstück auf einen darunter befindlichen zur Abdichtung dienenden O-Ring gelangen.

Die EP 2503122 beschreibt eine Dosierpumpe für ein Reduktionsmittel zur Abgasnachbehandlung mit einem Kühlmittelkreislauf.

Die WO 2012/049175 und die JP H0996212 offenbaren Reduktionsmittelinjektoren mit einem Kühlmittelkreislauf.

### Darstellung der Erfindung

Die der Erfindung zugrunde liegende Aufgabe wird durch ein Dosiermodul mit den Merkmalen des Anspruchs 1 gelöst. Vorteilhafte Ausgestaltungen sind in den abhängigen Ansprüchen beschrieben.

Erfindungsgemäß wird vorgeschlagen, dass das Anschlussstück des Dosiermoduls in Abkehr von bisher eingesetzten Werkstoffen, nunmehr aus metallischem Material gefertigt wird. Dies bedeutet, dass das Anschlussstück bei hohen Temperaturlasten im Betrieb sowie im Abstellfall auftretenden Temperaturlasten sowie den mechanischen Beanspruchungen
besser standhält. Durch die Materialwahl des Anschlussstückes und die damit verbundene verbesserte Wärmeleitung zum Dichtelement zwischen dem Anschlussstück und dem Einspritzventil des Dosiermoduls kann eine eine potentielle Leckagestelle darstellende Weichstoffdichtung vollständig entfallen.

Erfindungsgemäß wird vorgeschlagen, das Anschlussstück direkt mit dem Einspritzventil des Dosiermoduls zu verbinden und beispielsweise durch Herstellung einer stoffschlüssigen Verbindung, wie des Laserschweißens eine umlaufende Dichtung darzustellen. Dadurch entfällt zum einen wie oben stehend bereits erwähnt, die als sehr temperaturkritisch einzustufende Weichstoffdichtung und zum anderen wird die Robustheit dieser Abdichtung im Vergleich zum Einsatz einer Weichstoffdichtung erheblich erhöht.

Bei einer derartigen Gestaltung des Dosiermodules könnten bei der Druckleitung auftretende Kräfte, die zum Beispiel als Schwingungen im Betrieb manifestieren, durch die direkte Verbindung zwischen dem Anschlussstück und dem Einspritzventil direkt auf das Einspritzventil wirken, so dass eine zusätzliche Entlastung des Einspritzventiles vorzusehen ist. Die Entlastung des Einspritzventiles des Dosiermodules von im Betrieb unweigerlich auftretenden, mit durch die Druckleitung verursachten Kräften kann beispielsweise dadurch dargestellt werden, dass das Anschlussstück, nunmehr hergestellt aus metallischem Material in geeigneter Weise beispielsweise mit einem Anschlussblech verbunden wird. In bevorzugter Weise erfolgt dies ebenfalls durch Ausbildung einer stoffschlüssigen Verbindung, wie beispielsweise einer Laserschweißnaht. Dadurch kann erreicht werden, dass die über das Anschlussstück im Betrieb unweigerlich in das Einspritzventil eingeleiteten Kräfte über das Anschlussblech an einen das Einspritzventil umgebenden Kühlkörper abgeleitet werden können. Dadurch kann eine Entlastung des Einspritzventiles von mechanischen Kräften erreicht werden.

In einer weiteren vorteilhaften Ausgestaltung der der Erfindung zugrundeliegenden Lösung wird das Einspritzventil axial lediglich über die Anschlussstückbefestigung am Anschlussblech gehalten. Ein andernfalls erforderliches Sicherungsblech kann entfallen, so dass ein zusätzlicher Gewichts- und Kostenvorteil erreicht werden kann.

### Vorteile der Erfindung

Durch die erfindungsgemäß vorgeschlagene Lösung kann ein temperaturbeständiges Anschlussstück geschaffen werden, welches, auch wenn es sehr hohen Umgebungstemperaturen ausgesetzt ist, keine Schädigung erfährt.

Da durch die erfindungsgemäß vorgeschlagene Lösung die Möglichkeit eröffnet wird, eine stoffschlüssige Verbindung zwischen dem Anschlussstück und dem Einspritzventil zu schaffen, entfällt die Abdichtproblematik, die sich zwangsläufig bei Einsatz einer temperaturempfindlichen Weichkörperdichtung einstellt. Die vorzugsweise als Laserschweißnaht ausgebildete Abdichtung ist zum einen temperaturbeständig, zum anderen ist sie dicht. Eine Auswahl spezieller Weichstoffdichtungswerkstoffe kann nun ebenso entfallen wie die Weichstoffdichtung selbst. Diese wird üblicherweise als O-Ring ausgeführt. Durch die erfindungsgemäß vorgeschlagene Lösung kann diese kritische Dichtungsstelle entfallen.

Durch die erfindungsgemäß vorgeschlagene Lösung kann des weiteren eine Festigkeitserhöhung des Anschlußstückes durch den Wechsel von Kunststoff auf Metall erreicht werden. Da bei der erfindungsgemäß vorgeschlagenen Lösung die aus einem weichen Dichtungswerkstoff hergestellte Dichtung in Gestalt eines O-Rings entfallen kann, lässt sich eine Ventilverkürzung durch den Entfall eben dieses Bauteiles erreichen. Dies wiederum wirkt sich günstig auf die zum Einbau des Dosiermoduls benötigten Bauraum aus, so dass hinsichtlich des Fahrzeugpackaging Bauraumvorteile erzielt werden können. Des Weiteren können bei der Montage des erfindungsgemäß vorgeschlagenen Dosiermodules die Fertigungsschritte Montage der Weichstoffdichtung und Montage des das Dosierventil in axiale Richtung sichernden Sicherungsbleches entfallen. Der Entfall des Sicherungsbleches wirkt sich zudem günstig auf das Gesamtgewicht des Dosiermoduls aus.

### Kurze Beschreibung der Zeichnungen

Anhand der Zeichnung wird die Erfindung nachstehend eingehender beschrieben.

Es zeigt:
- Figur 1: eine perspektivische Wiedergabe eines Dosiermodules, welches von einem mehrteiligen Kühlkörper umschlossen ist und
- Figur 2: der Darstellung eines Dosiermodules, bei dem ein Anschlussstück aus metallischem Material gefertigt ist und stoffschlüssig mit einem Einspritzventil gefügt ist.

### Ausführungsvarianten

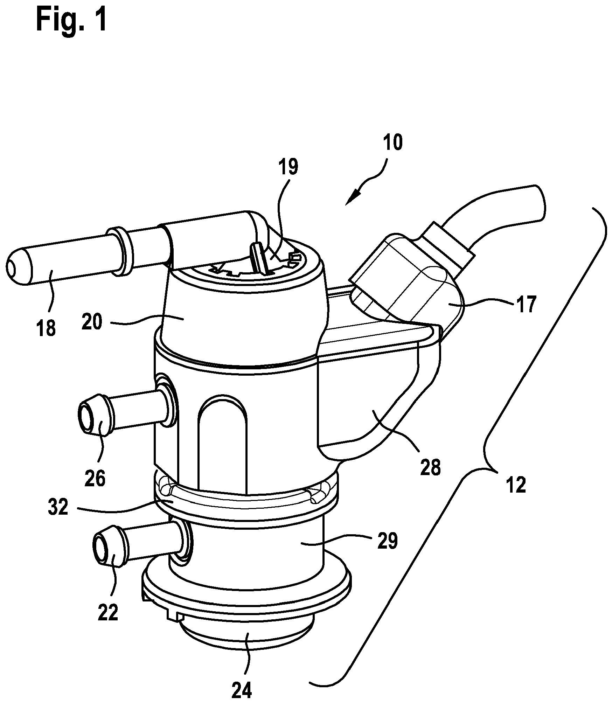

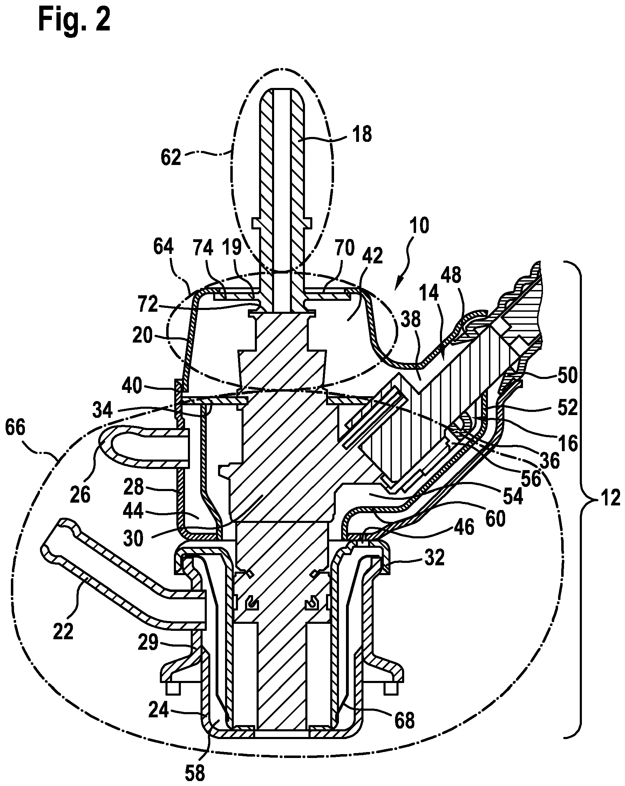

Bei dem nachfolgend anhand der Figuren 1 und 2 beschriebenen Dosiermodul handelt es sich um ein Dosiermodul zum Einbringen eines Betriebs-/Hilfsstoffes, insbesondere eines Reduktionsmittels, wie beispielsweise Harnstoff oder eine Harnstoff-Wasser-Lösung, in den Abgastrakt einer Verbrennungskraftmaschine. In Einbauumgebung des erfindungsgemäß vorgeschlagenen Dosiermoduls 10 können Temperaturen im Bereich zwischen 100°C und 160°C auftreten. Es können je nach Einsatzzweck und Einbauort auch höhere oder niedrigere Temperaturniveaus vorliegen. Durch den Betriebs-/Hilfsstoff, insbesondere ein Reduktionsmittel, wie beispielsweise Harnstoff oder eine Harnstoff-Wasser-Lösung, werden die NOₓ-Bestandteile, die im Abgas von Verbrennungskraftmaschinen vorhanden sind, zu H₂O und N₂ reduziert. Die erfindungsgemäß vorgeschlagene Vorrichtung zur Kühlung eines Dosiermodules 10 kann auch bei anderen Dosiervorrichtungen, die innerhalb eines bestimmten Temperaturbereiches zu betreiben sind, als Kühlung für diese eingesetzt werden.

Figur 1 zeigt, dass ein Dosierventil eines Dosiermodules 10 von einer vollständigen Einhausung 12, welche ein zweites Gehäuse darstellt, umschlossen ist. Die vollständige Einhausung 12 umfasst eine Oberschale 20, die beispielsweise in Kappenform ausgebildet sein kann, eine Kunststoffabdeckung 17, die insbesondere aus einem elastische Eigenschaften aufweisenden Material, wie beispielsweise einem Kunststoffmaterial oder einem Gummi gefertigt sein kann. Des Weiteren umfasst die Einhausung 12 eine Mittelschale 28, ferner eine unterhalb dieser angeordnete Führungshülse 32 sowie eine darunterliegende Unterschale 29, in die - in Figur 1 nur teilweise dargestellt - ein topfförmiger Einsatz 24 eingelassen ist.

Wie aus der perspektivischen Wiedergabe gemäß Figur 1 hervorgeht, ist das Dosierventil des Dosiermodules 10 gänzlich von den oben stehend aufgezählten Komponenten 17, 20, 28 und 29 umschlossen. Lediglich ein unteres Ende des topfförmigen Einsatzes 24 ragt unterhalb der Unterschale 29 der vollständigen Einhausung 12 des Dosiermodules 10 hervor.

Wie aus der perspektivischen Darstellung gemäß Figur 1 des Weiteren hervorgeht, befindet sich ein Kühlfluidzulauf 22 in der Mantelfläche der Unterschale 29. Demgegenüber befindet sich in der Mantelfläche der Mittelschale 28 ein Kühlfluidrücklauf 26.

Der Darstellung gemäß Figur 2 ist ein Dosiermodul zu entnehmen, bei dem ein Anschlusstück aus metallischem Material gefertigt ist, und stoffschlüssig mit einem Einspritzventil verbunden ist.

Der Querschnitt gemäß Figur 2 zeigt, dass ein Dosierventil 30 von der Einhausung 12 vollständig umgeben ist. Die Einhausung 12 umfasst dabei die Oberschale 20. Durch die Oberschale 20 erstreckt sich der Betriebs-/Hilfsstoffzulauf 18, über welchen insbesondere ein Reduktionsmittel, wie beispielsweise Harnstoff oder eine Harnstoff-Wasser-Lösung, dem Dosiermodul 10 zugeführt wird. Figur 2 zeigt, dass dieser Zulauf 18 an einem Anschlussstück 19 gewinkelt ausgebildet sein kann und mit einem Flansch, eine obere Stirnseite des Dosierventiles 30 überdeckend, durch die Oberschale 20 gekapselt ist. Die Oberschale 20 ihrerseits umfasst einen Hohlraum 42, der von dem Kühlfluid durch eine Trennrippe 60 gegen die Mittelschale 28, deren Hohlraum 44 von dem Kühlfluid durchströmbar ist, getrennt ist. Wie der Schnittdarstellung gemäß Figur 2 des Weiteren entnommen werden kann, umfasst die Oberschale 20 im Bereich eines Steckers 16 bzw. eines elektrischen Steckkontaktes 36 einen Luftspaltabschnitt, der Teil einer Luftspaltisolierung 14 des elektrischen Steckkontaktes 16 bzw. 36 des Dosiermodules 10 ist.

Unterhalb der Oberschale 20, die Teil der Einhausung 12 des Dosiermodules 10 ist, befindet sich eine Mittelschale, die durch Bezugszeichen 28 gekennzeichnet ist. Die Mittelschale 28 umfasst eine Aufnahme 40, in welche die den Hohlraum 42 begrenzende Oberschale 20 eingelassen ist.

Die Mittelschale 28 umgibt ebenfalls das Dosierventil 30, welches bei bisherigen Lösungen durch das in Figur 2 noch dargestellte Sicherungsblech 34 in axiale Richtung gesichert war. Der erfindungsgemäß vorgeschlagenen Lösung folgend, kann das in Figur 2 noch eingezeichnete Sicherungsblech 34 entfallen, da die Axialsicherung des Dosierventiles 30 nunmehr durch die stoffschlüssige Verbindung, d.h. die zweite Verbindungsnaht 72 zwischen dem Reduktionsmittel Zulauf 18 des Anschlußstückes 19 und dem entsprechenden Anschluß des Dosierventilkörpers 30 in axiale Richtung gegeben ist.

Die Mittelschale 28 sitzt auf einer Führungshülse 32 auf. Die Führungshülse 32 ihrerseits ist auf einem im Wesentlichen topfförmig ausgebildeten Einsatz 24 aufgenommen.

Der Schnittdarstellung gemäß Figur 2 ist zu entnehmen, dass die Mittelschale 28 den Hohlraum 44 umfasst, der von dem Kühlfluid durchströmt wird und gleichzeitig auch einen ersten Luftspaltabschnitt 54 sowie einen zweiten Luftspaltabschnitt 56 enthält. Der erste Luftspaltabschnitt 54 und der zweite Luftspaltabschnitt 56 sind durch eine Trennrippe 60, die in der Mittelschale 28 ausgebildet ist, von dem Hohlraum 44 getrennt. Insbesondere ist der Verlauf der Trennrippe 60 in der Mittelschale 28 derart gewählt, dass sich der erste Luftspaltabschnitt 54 und der sich daran anschließende zweite Luftspaltabschnitt 56 entlang des elektrischen Steckkontaktes 36 in Richtung auf die Steckkontaktabdeckung 17 hin erstrecken. Die Trennrippe 60, welche den ersten Luftspaltabschnitt 54 und den zweiten Luftspaltabschnitt 56 gegen den von dem Kühlfluid durchströmten Hohlraum 44 abtrennen, mündet an einem Wandende 52 der Mittelschale 28. Dort befindet sich auch ein Verrastungsanschluss 50, ebenso wie auf der gegenüberliegenden Seite der Oberschale, vergleiche Position 48 in Figur 2. An den beiden Verrastungsstellen 48 bzw. 50, die einerseits an der Oberschale 20 und andererseits an der Mittelschale 28 ausgebildet sind, ist die Steckkontaktabdeckung 17 lösbar verrastet. Wie bereits in Zusammenhang mit Figur 1 erläutert, ist die Steckkontaktabdeckung 17 mit einer Verrastung 48 an der Oberschale 20 und mit einer dieser gegenüberliegenden Verrastung 50 an der Außenseite der Mittelschale 28 lösbar verbunden.

Im Bereich der elektrischen Kontaktierung 36 wird eine Kühlung durch die Luftspaltisolierung 14 an den Luftspaltabschnitten 38, 54 und 56 wie in Figur 2 dargestellt, ermöglicht. Aus Figur 2 geht des Weiteren hervor, dass die Mittelschalte 28 ein "Hybridbauteil" darstellt, welches sowohl eine Luftspaltisolierung im Bereich des elektrischen Steckkontaktes 36 aufweist und andererseits mindestens einen Hohlraum 44 enthält, der von Kühlfluid durchströmt ist, d.h. der zwangsgekühlt ist.

Wie dem unteren Bereich von Figur 2 entnommen werden kann, befindet sich unterhalb der Führungshülse 32 die Unterschale 29. Die Unterschale 29 ihrerseits nimmt den mit Bezugszeichen 24 bezeichneten topfförmigen Einsatz auf. Am unteren Ende des Dosiermodules 10 können Temperaturen von 120°C und mehr auftreten. Aus diesem Grunde liegt im Bereich der Unterschale 29 der Kühlfluidzulauf 22, in den das Kühlfluid in die Unterschale 29 und von dort in einen Hohlraum 66 des topfförmigen Einsatzes 24 überströmt. Im unteren Bereich des Dosierventiles 30 befindet sich auch die Einspritzdüse, über die ein Sprühnebel aus Betriebs-/Hilfsstoff und Luft in den Abgastrakt der Verbrennungskraftmaschine eingespritzt wird. Da hier betriebsbedingt Höchsttemperaturen auftreten, liegt der Kühlfluidzulauf 22 zur Optimierung der Kühlwirkung in diesem Teil des Dosiermodules 10, um im Bereich der dort auftretenden hohen Temperaturen eine optimale Wärmabfuhr zu gewährleisten.

Aus der Schnittdarstellung gemäß Figur 2 geht des Weiteren hervor, dass nach Eintritt des Kühlfluides durch den Kühlfluidzulauf 22 nach Durchströmen des Hohlraumes 66 des topfförmigen Einsatzes 24 das Kühlfluid über mindestens eine Durchgangsöffnung 46 dem Hohlraum 44 oberhalb des Bodens der Mittelschale 28 zuströmt. Wie Figur 2 zeigt, fluchten Durchgangsöffnungen 46 in der Führungshülse 32 und im Boden der Mittelschale 28 zueinander, so dass das Kühlfluid nach Durchströmen des topfförmigen Einsatzes 24 in den Hohlraum 44 der Mittelschale 28 übertritt. Nach Passage des Hohlraumes 44 der Mittelschale 28, der durch die Trennrippe 60 von den Luftspaltabschnitten 54, 56 flüssigkeitsdicht getrennt ist, verlässt das nach Umströmen des Dosiermodules 10 durch dessen Abwärme erwärmte Kühlfluid den Hohlraum 44 der Mittelschale 28 am Kühlfluidrücklauf 26, wie in Figur 2 dargestellt. Die Durchgangsöffnungen 46 stellen einen Übertritt des Kühlfluids vom Hohlraum 66 des topfförmigen Einsatzes 24 in den mindestens einen Hohlraum 44 der Mittelschale 28 der Einhausung 12 sicher.

Figur 2 zeigt zudem, dass sich am Dosiermodul 10 ein exponierter Bereich 62, d.h. ein weder Flüssigkeits- noch luftgekühlter Bereich befindet, der insbesondere den Bereich des Anschlussstückes 19 umfasst. Des Weiteren zeigt Figur 2, dass sich unterhalb des exponierten Bereiches 62 ein isolierter Bereich 64 befindet. In diesem Bereich erfolgt die Kühlung durch eine Luftspaltisolierung 14 ausgehend vom Hohlraum 42, welcher durch die Oberschale 20 in Kappenform begrenzt ist. Unterhalb dieses isolierten Bereiches 64 des Dosiermodules 10 befindet sich ein wassergekühlter Bereich 66, der vom Kühlfluid, welches über den Kühlwasserzulauf 22 und den Kühlwasserrücklauf 26 durch die verschiedenen Hohlräume 58 und 44 zirkuliert, gekühlt wird. Mit Bezugszeichen 60 ist eine Trennrippe bezeichnet, welche innerhalb der Mittelschale 28 den ersten Luftspaltabschnitt 54 vom Mittelschalenhohlraum 44 trennt.

Die Darstellung gemäß Figur 2 zeigt, dass das Anschlussstück 19 ein beispielsweise kreisrund um den Reduktionsmittelzulauf 18 verlaufendes Anschlussblech 74 aufweist. Der erfindungsgemäß vorgeschlagenen Lösung folgend, ist dieses beispielsweise kreisrund ausgebildete Anschlussblech 74 im Bereich einer ersten Verbindungsnaht 70 mit dem aus metallischem Material gefertigten Anschlussstück 19 stoffschlüssig verbunden. Die erste Verbindungsnaht 70 dient der Kraftübertragung, d.h. der Übertragung von auf den Reduktionsmittelzulauf 18 einwirkenden Kräften auf das Dosiermodul 10. Vorzugsweise ist die erste Verbindungsnaht 70 zwischen dem Anschlussblech 74 und einem diesem gegenüber liegenden Bereich der kappenförmig ausgebildeten Oberschale 20 des Anschlussstückes 19 als Laserschweißnaht ausgebildet. Desweiteren lässt sich der Darstellung gemäß Figur 2 entnehmen, dass der Reduktionsmittelzulauf 18 des Anschlussstückes 19 entlang einer zweiten Verbindungsnaht 72 mit einer Stirnseite des Dosierventilkörpers 30 stoffschlüssig verbunden ist. Die stoffschlüssige Verbindungsnaht 72 zwischen dem Reduktionsmittelzulauf 18 des Anschlussstückes 19 und dem entsprechenden Anschluss des Dosierventilkörpers 30 ist ebenfalls als Laserschweißnaht ausgeführt. Diese zweite Verbindungsnaht 72 stellt eine Flüssigkeitsdichtung dar, ausgebildet zwischen dem Dosierventilkörper 30 und dem Reduktionsmittelzulauf 18 des Anschlussstückes 19. Durch die durch die zweite Verbindungsnaht 72 dargestellte Flüssigkeitsdichtung wird der Hohlraum 42 gegen ein Endringen von Reduktionsmittel geschützt. Durch die Trennwand 34, welche den Hohlraum 42 vom Mittelschalenhohlraum 44 für das Kühlmedium trennt, sind die beiden Medienräume 42 beziehungsweise 44 gegeneinander abgedichtet, wobei die Trennwand 34 an der Außengeometrie des Dosierventilkörpers 30 aufgenommen ist.

Durch die Lösung gemäß Figur 2 insbesondere durch die erste Verbindungsnaht 70 zwischen dem umlaufend ausgebildeten Anschlussblech 74 einerseits und der Innenseite des in Kappenform aus metallischem Werkstoff gefertigten Oberschalenteils 20 andererseits folgt eine mechanische Entlastung des Dosierventilkörpers 30. Die durch das Anschlusstück 19 reduzierten Kräfte werden über das Anschlussblech 74 an den Kühlkörper d.h. die Kompletteinhausung 12 übertragen und nicht unmittelbar an das von der Kompletteinhausung 12 umgebene Dosiermodul 10.

In der Darstellung gemäß Figur 2 ist das Sicherungsblech 34 aus Gründen der Verdeutlichung noch eingezeichnet. Es ist erkennbar, dass in Figur 2 das axiale Sicherungsblech 34 in eine entsprechende Nut an der Mantelfläche des Dosierventiles 30 eingreift, wodurch eine Sicherung dieses Bauteiles in axiale Richtung gegeben ist. Dieses Sicherungsblech 34 entfällt, da die Axialsicherung des Dosierventiles 30 nunmehr durch die zweite Verbindungsnaht 72, wie in Figur 2 dargestellt, übernommen wird.

## Patentansprüche

1. Dosiermodul mit einem einen Dosierventilkörper (30) aufweisenden Dosierventil zum Eindosieren eines Betriebs- /Hilfsstoffes in einen Abgastrakt einer Verbrennungskraftmaschine und mit einer Vorrichtung zur Kühlung des Dosierventiles (10), wobei die Vorrichtung ein mehrere Gehäuseabschnitte (19), (20), (28), (29) aufweisendes Gehäuse (12) aufweist, wobei ein erster Gehäuseabschnitt (19), (20), an welchem ein Zulauf (18) für den Betriebs- /Hilfsstoff ausgeführt ist und der sich in einem temperaturexponierten Bereich (62) des Dosiermoduls (10) befindet, aus einem metallischen Material gefertigt ist, **dadurch gekennzeichnet, daß** der erste Gehäuseabschnitt ein den Zulauf (18) umfassendes Anschlussstück (19) und eine Oberschale (20) umfasst, wobei ein Anschlußblech (74) des Anschlußstücks (19) und die Oberschale (20) durch eine erste Verbindungsnaht miteinander verbunden sind, und wobei der Dosierventilkörper (30) und das Anschlußstück (19) durch eine zweite Verbindungsnaht (72) miteinander verbunden sind.

2. Dosiermodul gemäß Anspruch 1, **dadurch gekennzeichnet, dass** die erste Verbindungsnaht (70) als Laserschweißnaht ausgeführt ist.

3. Dosiermodul gemäß Anspruch 1 oder 2, **dadurch gekennzeichnet, dass** die zweite Verbindungsnaht (72) als Laserschweißnaht ausgeführt ist und eine Flüssigkeitsabdichtung darstellt.

4. Dosiermodul gemäß einem der vorhergehenden Ansprüche, **dadurch gekennzeichnet, dass** der erste Gehäuseabschnitt (19), (20) einen Hohlraum (42) begrenzt.

5. Dosiermodul gemäß einem der vorhergehenden Ansprüche, **dadurch gekennzeichnet, dass** der erste Gehäuseabschnitt (19, 20), an welchem der Zulauf (18) für den Betriebs-/Hilfsstoff ausgeführt ist, in stufenloser Drehlage mit dem Dosierventilkörper (30) des Dosiermodules (10) verbindbar ist.

## Claims

1. Metering module having a metering valve comprising a metering valve body (30) for dispensing an automotive fluid/additive into an exhaust tract of an internal combustion engine and having a device for cooling the metering valve (10), wherein the device comprises a housing (12) comprising a plurality of housing portions (19), (20), (28), (29), wherein a first housing portion (19), (20), on which an inlet (18) is formed for the automotive fluid/additive and which is situated in a temperature-exposed area (62) of the metering module (10), is made from a metal, **characterized in that** the first housing portion comprises a connection fitting (19) comprising the inlet (18), and an upper shell (20), wherein a connection plate (74) of the connection fitting (19) and the upper shell (20) are connected to one another by a first connecting seam, and wherein the metering valve body (30) and the connection fitting (19) are connected to one another by a second connecting seam (72).

2. Metering module according to Claim 1 **characterized in that** the first connecting seam (70) is formed as laser weld seam.

3. Metering module according to Claim 1 or 2, **characterized in that** the second connecting seam (72) is formed as a laser weld seam and constitutes a fluid seal.

4. Metering module according to one of the preceding claims, **characterized in that** the first housing portion (19), (20) defines a cavity (42).

5. Metering module according to one of the preceding claims, **characterized in that** the first housing portion (19, 20), on which the inlet (18) for the automotive fluid/additive is formed, can be connected in an ungraduated rotational position to the metering valve body (30) of the metering module (10).

## Revendications

1. Module de dosage doté
d'une soupape de dosage présentant un corps (30) de soupape de dosage et servant à doser une substance d'alimentation et/ou une substance auxiliaire dans le conduit de gaz d'échappement d'un moteur à combustion interne et
d'un ensemble de refroidissement de la soupape de dosage (10),
l'ensemble présentant un boîtier (12) doté de plusieurs sections (19), (20), (28), (29) de boîtier,
une première section (19), (20) du boîtier sur laquelle est réalisée une amenée (18) pour la substance d'alimentation et/ou la substance auxiliaire et située dans une partie (62) du module de dosage (10) exposée à la température étant réalisée en un matériau métallique,
**caractérisé en ce que**
la première section du boîtier comporte une pièce de raccordement (19) qui comprend l'amenée (18) et une coquille supérieure (20),
**en ce qu'**une plaque de raccordement (74) de la pièce de raccordement (19) et la coquille supérieure (20) sont reliées mutuellement par un premier cordon de liaison et
**en ce que** le corps (30) de la soupape de dosage et la pièce de raccordement (19) sont reliés mutuellement par un deuxième cordon de liaison (72).

2. Module de dosage selon la revendication 1, **caractérisé en ce que** le premier cordon de liaison (70) est configuré comme cordon de soudage par laser.

3. Module de dosage selon les revendications 1 ou 2, **caractérisé en ce que** le deuxième cordon de liaison (72) est réalisé comme cordon de soudage par laser et constitue un joint d'étanchéité aux liquides.

4. Module de dosage selon l'une des revendications précédentes, **caractérisé en ce que** la première section (19), (20) du boîtier délimite une cavité (42).

5. Module de dosage selon l'une des revendications précédentes, **caractérisé en ce que** la première partie (19), (20) du boîtier sur laquelle est réalisée l'amenée (18) de la substance d'alimentation et/ou la substance auxiliaire peut être reliée au corps (30) de la soupape de dosage du module de dosage (10) en une position de rotation modifiable de manière continue.
